# EUROPEAN PATENT SPECIFICATION

(11) **EP 0 696 552 B1**
(45) Date of publication and mention of the grant of the patent: **20.01.1999**
(21) Application number: 95420211.5
(22) Date of filing: 24.07.1995
(51) Int. Cl.: C02F 1/32, C02F 1/72

(54) **Process for treating photographic effluents using ultraviolet and hydrogen peroxide**
Verfahren zur Behandlung von Abwasser aus Photoprozessen mit UV und Wasserstoffperoxid
Procédé de traitement d'effluents photographiques par les ultraviolets et le peroxyde d'hydrogène

(30) Priority: 08.08.1994 FR 9409968
(43) Date of publication of application: 14.02.1996
(73) Proprietor: KODAK-PATHE, F-75594 Paris Cedex 12 (FR); EASTMAN KODAK COMPANY, Rochester, New York 14650-2201 (US)
(72) Inventor: Strauel, Philippe, Kodak-Pathe, F-71102 Chalon sur Saone Cedex (FR)
(74) Representative: Parent, Yves

(56) References cited:
- EP-A- 0 444 530
- DE-A- 4 243 208
- US-A- 5 234 606
- PATENT ABSTRACTS OF JAPAN vol. 012 no. 450 (C-547) ,25 November 1988 & JP-A-63 175689 (NIPPON DENKI KANKYO ENG KK;OTHERS: 01) 20 July 1988,
- PATENT ABSTRACTS OF JAPAN vol. 012 no. 176 (C-498) ,25 May 1988 & JP-A-62 282689 (NIPPON DENKI KANKYO ENG KK) 8 December 1987,

## Description

### FIELD OF THE INVENTION

The present invention relates to a process for treating liquid effluents containing organic compounds which it is desired to destroy before discharging them to the drains, and in particular the invention concerns the treatment of photographic effluents by means of a low-pressure lamp emitting in the ultraviolet region.

Photographic effluents is intended to mean any aqueous solution resulting from the processing of photographic films and papers. Photographic effluents contain many organic compounds and have a high chemical oxygen demand (COD), which lies between 5 and 140 g O₂/l. In order to preserve the environment, it is necessary to destroy these organic compounds and therefore to lower the COD before being able to discharge these effluents into the sewage systems.

There are many works on the treatment of liquid effluents resulting from industrial waste water.

In particular, it is known that the combined action of UV and H₂O₂ can be used to eliminate small quantities of oxidizable materials from polluted water.

### BACKGROUND OF THE INVENTION

US patent 4 012 321 concerns the treatment of waste water containing solid organic matter on naval vessels. This water undergoes a primary treatment by oxidation using compressed air and elimination of the solids, and then a secondary treatment in which the COD is measured, H₂O₂ is added under pressure in a proportion of at least 2.1 times the COD, the solution is agitated and the mixture is sent into a chamber where it is exposed to UV light with a wavelength of less than 260 nm. The water to be treated has a COD of less than 5 g O₂/l in all the examples and contains mainly acetic acid and acetates. This process affords a reduction in COD of 4 to 1 g O₂/l in less than 100 minutes.

The German patent DE 3 843 679 describes a process for treating water, in which hydrogen peroxide in an appropriate but unspecified quantity and polychromatic ultraviolet light are used. This patent gives no information about the initial COD of the baths to be treated, nor about the reduction in COD obtained.

The French patent FR 2 303 766 describes the destruction of phenols with a low-pressure UV lamp, at a pH of 6 to 8, and cyanides with a high-pressure UV lamp at a pH of 9.5. The quantities of organic compounds to be eliminated are around 100 ppm, which corresponds to a very low COD.

An article by H M Castrantas and R D Gibilisco published in Chapter 6, pages 77-99 of the "ACS Symposium Series", No. 422, 1990, summarises the known uses of hydrogen peroxide for destroying pollutants such as phenolic compounds at concentrations of between 100 and 1000 ppm. According to this article, the UV/H₂O₂ combination is much more efficacious for destroying phenols and substituted phenols than UV alone, H₂O₂ alone or Fenton's reagent (Fe + H₂O₂).

The German patent application DE 3 501 528 describes the destruction of organic compounds using UV and H₂O₂. This process enables the heavy-metal complexes in the effluents to be destroyed. This process does not concern effluents with a high COD, in particular photographic effluents.

Japanese patent application JP-A-52035445 describes the destruction of organo-chlorides by the combined action of H₂O₂ and UV. This patent concerns highly acidic effluents with a low COD (3430 ppm in the table).

The patent application JP-A-520116865 describes the treatment of waste water comprising organic compounds in the presence of H₂O₂, metallic salts and UV with a wavelength of between 400 and 180 nm. This treatment enables the colour to be taken out of the effluents. The COD in Table 1 does not exceed 300 ppm.

All these processes of the prior art, which use a combination of hydrogen peroxide and ultraviolet light, apply only to the destruction of organic compounds in specific effluents with low CODs.

There are many works on the treatment of photographic effluents with a high COD, the majority using peroxides, dilute hydrogen peroxide or activated carbon.

The patent application PCT/EP 9300470 can for example be cited, which concerns a process comprising two oxidation steps respectively in an alkaline medium and in a neutral medium, and a subsequent absorption treatment.

The German patent application DE 3 921 436 describes a process for treating photographic effluents in which the effluents are subjected to a biological treatment, then to oxidation with air and then ozone, and then a subsequent treatment where photochemically catalysed OH radicals are caused to react. In this last reaction, the OH radicals can be produced by the action of UV on ozone. This multi-step process may use H₂O₂ in combination with UV light.

The German patent application DE 3 921 436 describes the treatment of photographic effluents by means of a multi-step process using, in one step, the combined action of ozone and ultraviolet light, but gives no information about the reduction in COD.

### SUMMARY OF THE INVENTION

Although these processes appear to be effective in reducing the COD of photographic effluents, research is directed towards simpler processes to be used, preferably in a single step and in which the formation of additional salts consequent upon the readjustments of the pH would be avoided.

European patent application EP-A-0,622,339, concerns the treatment of photographic effluents. These aqueous effluents contain many organic compounds and have a high chemical oxygen demand (COD), which lies between 5 and 120 g O₂/l. This process consists of treating the effluents by means of ultraviolet light from a polychromatic source and in the presence of hydrogen peroxide in a quantity lying between 0.5 and 3 times the COD and at a pH of less than or equal to 10.

This highly effective process consumes a relatively high amount of energy, and this is why it would be desirable to be able to have available a process which is more economical in energy and which would be particularly suited to the treatment of small quantities of photographic effluents, for example effluents from small processing laboratories such as mini-labs or radiology units.

One of the objects of the present invention is therefore to reduce the COD of photographic effluents by means of a simple, economical and efficacious process, in which the action of hydrogen peroxide is combined with ultraviolet radiation from a low-pressure lamp.

Photographic effluents comprise aqueous solutions from photographic baths for obtaining colour or black and white images, or else washing water comprising organic compounds forming part of the solutions for treating photographic films and papers. Photographic effluents have the characteristic of having a highly alkaline pH and extremely complex formulations. For example, development baths comprise essentially, in aqueous solution:
1) an organic reducing agent (or developer) designed to reduce the silver halide, such as hydroquinone, genol, phenidone, para-aminophenol, diaminophenol, glycine, pyrogallol, paraphenylene diamine, ascorbic acid and its derivatives. A list of color developers can be found in Research Disclosure of December 1989, Article 308119, Chapter XX,
2) an alkaline substance for maintaining a high pH, such as sodium or potassium carbonate, sodium metaborate, borax, caustic soda or potash, or phosphates.
   The development solution may also contain:
3) an oxidation preserver, usually anhydrous sodium sulphite, which also acts as a development regulator;
4) an anti-fogging retarder, usually potassium bromide or iodide, or an organic anti-fogging agent such as p-nitro-benzimidazol nitrate, benzotriazol, or di-phenyltetrazol disulphide;
5) a solvent for silver halides, which may be the sulphite itself or potassium sulphocyanide, sodium hyposulphite, ammonia solution, a thioalcohol or a mercapto-acid;
6) an antical agent, such as sequestering agents of the mineral type such as sodium hexametaphosphate or tetraphosphate, or of the organic type such as salts of ethylenediamine tetraacetic acid;
7) a wetting agent;
8) a product for inhibiting the deposition of silver, which retards the formation of silver sludge, such as dithiocarboxylic acid, benzopyrazol derivatives, organic polymers and polyacrylamides;
9) an anti-foaming agent;
10) an antiseptic;
11) an organic solvent such as alcohol or glycol;
12) a hardening agent, such as glutaraldehyde;
13) a permeability agent, such as benzyl alcohol.

Photographic effluents therefore comprise high quantities of organic compounds. The COD of photographic effluents often varies between 5 and 140 g O₂/l and the total organic carbon content (TOC in g C/l) between 1 and 50 g C/l.

The problem of the present invention is therefore to significantly reduce the COD of photographic effluents having a high COD, whilst using as little energy as possible.

This problem is resolved by a process for eliminating organic compounds in photographic effluents having a chemical oxygen demand (COD) of between 5 g O₂/l and 140 g O₂/l by irradiation with ultraviolet light in the presence of hydrogen peroxide, a process comprising a single step in which the ultraviolet light comes from a low-pressure monochromatic source.

According to the invention, the quantity of oxygen contributed by the hydrogen peroxide, expressed in grams per litre, is between 0.5 and 3 times the COD of the effluent to be treated, and preferably around 1 to 2 times the COD. The pH of the treatment is less than or equal to 10.5 and preferably between 6 and 9. The temperature is between 40 and 80°C and preferably between 45 and 70°C.

The treatment according to the invention affords an effective and economical destruction of the organic compounds in the photographic effluents and avoids the formation of sludge or undesirable compounds, such as for example cyanides or chlorinated organic compounds.

### BRIEF DESCRIPTION OF THE DRAWINGS

Fig. 1 represents a device for carrying out the invention.
Fig. 2 is a graph representing the decrease in COD versus the energy of the lamp.

### DETAILED DESCRIPTION

In the process according to the invention, a low-pressure monochromatic source is used, which is preferably a low-pressure mercury vapour lamp. In this type of lamp, the mercury pressure is between 10⁻³ and 10 mm Hg and the radiation emitted is virtually monochromatic and highly intense at approximately 254 nm. The energy supplied by such a lamp causes the activation of the hydrogen peroxide and the formation of hydroxyl radicals. By comparison, the "high-pressure" mercury vapour lamps of the prior art have a mercury pressure of between 10³ and 10⁵ mm Hg and emit at between 200 and 600 nm.

Photographic effluents may be highly basic; for example, developers have a pH of around 12. The addition of H₂O₂ in an appropriate quantity lowers the pH, but sometimes insufficiently. An excessively high pH causes decomposition of H₂O₂ which is not completely effective, and an excessively low pH makes it necessary for the solution to be neutralised afterwards before being discharged to the drains, which entails the formation of undesirable salts. The process according to the invention is applicable to solutions having a pH of less than or equal to 10.5 but, for the reasons indicated above, a pH of between 6 and 9 is preferred.

The quantity of hydrogen peroxide to be used in the present invention is determined so that the quantity of oxygen contributed by the hydrogen peroxide, expressed in g/l of solution, is between 0.5 and 3 times the COD. Preferably, a quantity of H₂O₂ corresponding to 1 to 2 times the COD is used.

A high temperature assists a rapid oxidation reaction, but the radiation emitted by the low-pressure lamp is more intense in the temperature range lying between 0 and 50°C. The temperature at which the process according to the invention is used lies between 40 and 80°C and preferably between 45 and 70°C.

One of the problems encountered with photographic solutions is that they have, before treatment, a high optical density, for example around 14 at a wavelength of 375 nm. It is therefore necessary for the UV light to be able to penetrate the solution sufficiently and for the agitation to be sufficient for the UV/H₂O₂ interaction to be complete.

An essential parameter in the present invention is the quantity of light energy to be supplied to the solution in order to obtain the desired reduction in COD. Since some standards for the discharge of effluents require a COD level below 2 g/l and sometimes even as low as 0.5 g/l, a reduction of as much as 95% and even more may be desirable. The quantity of energy required to reduce the COD by a given percentage is a function of the value of this percentage.

"Quantity of energy necessary" is intended to mean the quantity of energy consumed by the UV lamp. This energy, expressed in watt.hour per litre of solution (Wh/l), is the product of P.h/l where P is the electrical power of the UV lamp expressed in watts, as given by the manufacturer, h the time in hours and l the volume of the solution in litres.

By way of information, it was found experimentally that, if an effluent with an initial COD of 14 g O₂/l is treated with a quantity of oxygen contributed by hydrogen peroxide of between 1 and 2 times the COD, at a pH of between 6 and 9, the quantity of energy consumed by the low-pressure UV lamp in order to reduce the COD by 90% is between 800 and 1200 Wh/l, whilst this energy is 1800 Wh/l for reducing the COD by more than 95%.

The invention will be better understood by referring to the following examples.

### EXAMPLES

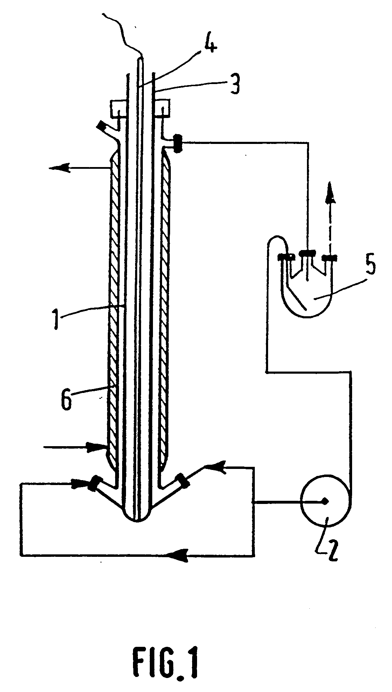

In all the examples, the device shown diagrammatically in Figure 1 is used.

The effluent, to which H₂O₂ has been added and the pH of which has if necessary been adjusted by means of sulphuric acid, is poured into the receptacle (5). The solution is conveyed into the reactor (1) outside the quartz sleeve (3) by means of pumps (2). The reactor (1) has a capacity of 50 ml and is thermostatically controlled by means of the double jacket (6). The UV lamp (4) is at the centre of the quartz sleeve (3). A volume of solution of up to 130 ml is treated by recirculating the solution.

### EXAMPLE 1

In this example, the liquid effluent to be treated is a color developer used for the E6 processing of reversal color films. This effluent comprises, in aqueous solution, the following compounds:

| | |
|---|---|
| DESQUEST 2006^{R}* | 4.75 g/l |
| H₃PO₄ (85%) | 9.08 g/l |
| Anhydrous Na₂SO₃ | 6.75 g/l |
| Citrazinic acid | 0.56 g/l |
| KODAK CD3^{R}** developer | 10.45 g/l |
| KODAK Silver Halide Solvent HS-104R | 0.86 g/l |
| NaBr | 0.55 g/l |
| KI | 0.04 g/l |
| and KOH for obtaining a pH of 11.97. | |

| | |
|---|---|
| * Pentasodium salt of aminotris(methylphosphoric) acid | |
| ** 4-amino-3-methyl-N-ethyl-N-beta-(methanesulphonamido) ethylaniline sulphate (3/2 H₂SO₄,H₂O). | |

The characteristics of the effluent to be treated are as follows:

| | |
|---|---|
| Initial pH | approx 12 |
| Optical density at 450 nm | 0.41 |
| Optical density at 375 nm | 13.73 |
| Initial COD | 14 g/l |
| Initial TOC | 5.8 g/l |

Table 1 below summarises the data relating to the quantity of H₂O₂ put in solution, expressed in moles/l and as the number of times the COD (x COD), the pH, the temperature, the volume, in ml, of solution treated in the 50 ml reactor, the energy consumed by the lamp in Wh/l in order to reduce the COD by 90% in Examples 1-4, and approximately 96-97% in Examples 5-6, the % of energy required compared with Example 1, and the total organic carbon (COT in mg C/l).

Under the experimental conditions, practically all the hydrogen peroxide is consumed.

In Comparative Examples 1 and 5, a HERAEUS TQ150 high-pressure mercury vapour lamp (HP in Table I) with a power of 150 W and emitting at between 200 and 600 nm is used.

In Examples 2-4 and 6 according to the invention, a HERAEUS TNN 15/32 low-pressure mercury vapour lamp (LP in Table I) with a power of 15 W and emitting at 254 nm is used.

From the results in Table I, it can be seen, by comparing Examples 1 and 2-4, that the energy required to reduce the COD by 90% is 40 to 60% lower with the low-pressure lamp than with the high-pressure lamp.

The TOC measurements show that the quantity of organic carbon in solution for a given COD is comparable with the two types of lamp.

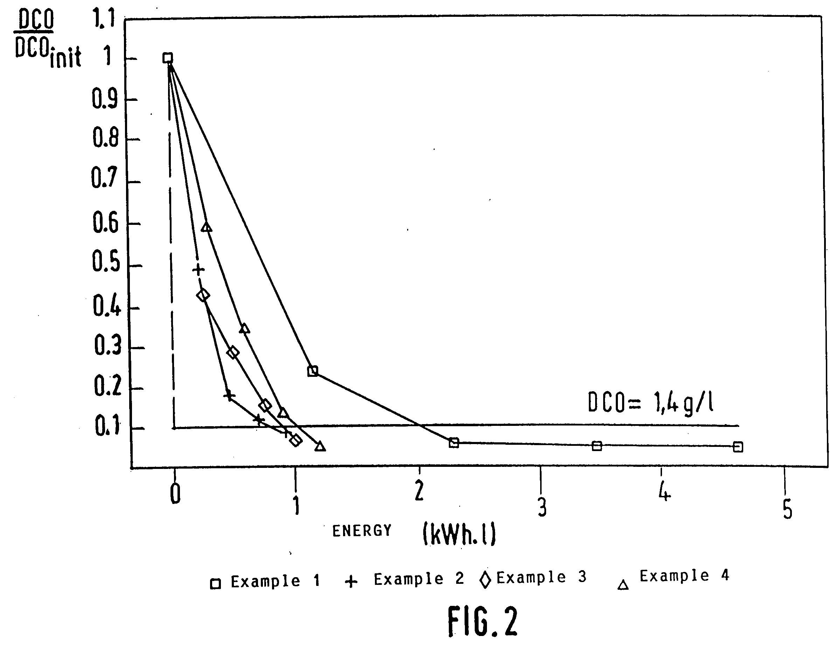

Figure 2, which gives the COD/CODᵢₙᵢₜᵢₐₗ ratio as a function of the energy in kWh/l for Examples 1-4, shows that the energy required to reduce the COD by 90% (COD/CODᵢₙᵢₜ = 0.1) is approximately 800 Wh/l lower for Examples 2-4 than for Example 1.

In Examples 5 and 6, the two lamps made it possible to obtain a COD of below 0.5 g O₂/l, but with a longer treatment time and a higher quantity of energy. In this case too, the energy required with the low-pressure lamp is less than that required with the high-pressure lamp.

After treatment, all the solutions are colourless.

These examples show that in all cases where the treatment time and the volume to be treated are not constraints, the use of a low-pressure lamp makes it possible to use less energy and consequently to reduce the treatment cost.

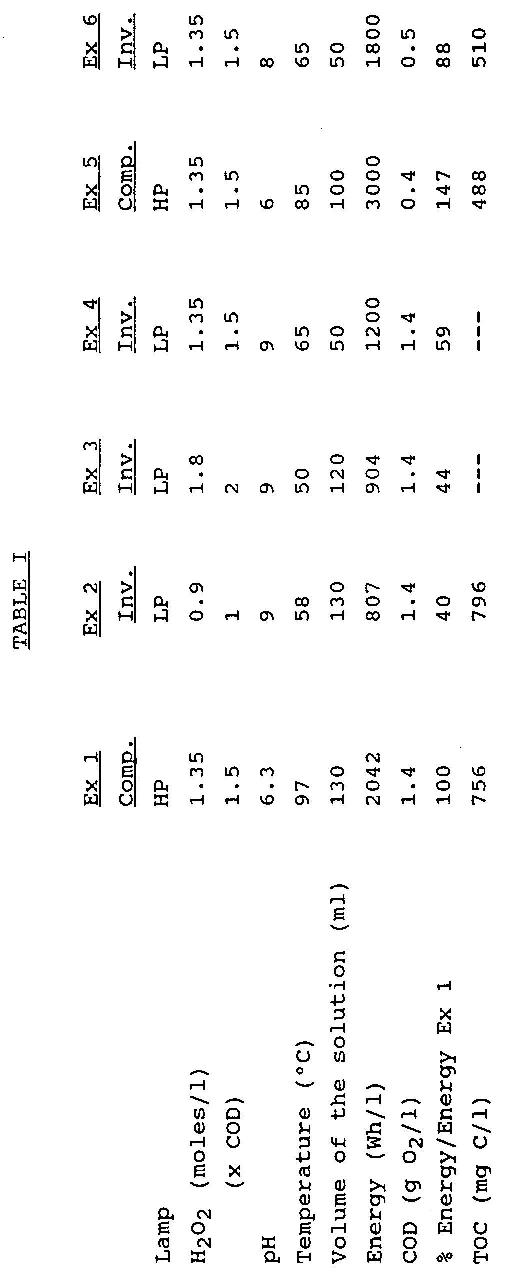

## Claims

1. Process for eliminating organic compounds in photographic effluents having a chemical oxygen demand (COD) of between 5 g O₂/l and 140 g O₂/l by means of irradiation with ultraviolet light in the presence of hydrogen peroxide, characterised in that the process comprises a single step in which the ultraviolet light comes from a low-pressure monochromatic source.

2. Process according to Claim 1, in which the quantity of oxygen contributed by the hydrogen peroxide expressed in grams per litre is between 0.5 and 3 times the COD of the effluent to be treated.

3. Process according to Claim 2, in which the quantity of oxygen contributed by the hydrogen peroxide, expressed in grams per litre, is between 1 and 2 times the COD of the effluent to be treated.

4. Process according to Claim 1, in which the pH of the treatment is less than or equal to 10.5.

5. Process according to Claim 4, in which the pH of the treatment is between 6 and 9.

6. Process according to Claim 1, in which the temperature is between 40 and 80°C.

7. Process according to Claim 6, in which the temperature is between 45 and 70°C.

8. Process according to Claim 1, in which the source of ultraviolet light is a low-pressure mercury vapour lamp.

9. Process according to Claim 8, in which the low-pressure mercury vapour lamp emits at around 254 nm.

10. Process according to Claim 1, in which the photographic effluents come from baths for the color development of silver halide photographic products.

11. Process according to Claim 10, in which the photographic effluents contain paraphenylene diamines.

## Patentansprüche

1. Verfahren zur Eliminierung von organischen Verbindungen in photographischen Abwässern mit einem chemischen Sauerstoffbedarf (COD) zwischen 5 g O₂/l und 140 g O₂/l durch Bestrahlung mit ultraviolettem Licht in Gegenwart von Wasserstoffperoxid, dadurch gekennzeichnet, daß das Verfahren eine einzelne Stufe umfaßt, in der das ultraviolette Licht von einer monochromatischen Niederdruck-Quelle stammt.

2. Verfahren nach Anspruch 1, in dem die Menge an Sauerstoff, der durch das Wasserstoffperoxid beigesteuert wird, ausgedrückt in Gramm pro Liter, zwischen dem 0,5- und 3-fachen des COD-Wertes des zu behandelnden Abwassers liegt.

3. Verfahren nach Anspruch 2, in dem die Menge an Sauerstoff, der durch das Wasserstoffperoxid beigesteuert wird, ausgedrückt in Gramm pro Liter, zwischen dem 1- und 2-fachen des COD-Wertes des zu behandelnden Abwassers liegt.

4. Verfahren nach Anspruch 1, bei dem der pH-Wert der Behandlung bei weniger als oder gleich 10,5 liegt.

5. Verfahren nach Anspruch 4, bei dem der pH-Wert der Behandlung zwischen 6 und 9 liegt.

6. Verfahren nach Anspruch 1, bei dem die Temperatur zwischen 40 und 80°C liegt.

7. Verfahren nac Anspruch 6, bei dem die Temperatur zwischen 45 und 70°C liegt.

8. Verfahren nach Anspruch 1, bei dem die Quelle des ultravioletten Lichtes eine Niederdruck-Quecksilberdampflampe ist.

9. Verfahren nach Anspruch 8, bei dem die Niederdruck-Quecksilberdampflampe bei um 254 nm emittiert.

10. Verfahren nach Anspruch 1, bei dem die photographischen Abwässer von Bädern für die Farbentwicklung von photographischen Silberhalogenidprodukten stammen.

11. Verfahren nach Anspruch 10, bei dem die photographischen Abwässer Paraphenylendiamine enthalten.

## Revendications

1. Procédé pour l'élimination de composés organiques dans des effluents photographiques ayant une demande chimique en oxygène (DCO) comprise entre 5 g O₂/ℓ et 140 g O₂/ℓ par irradiation à la lumière ultra-violette en présence de peroxyde d'hydrogène, caractérisé en ce que le procédé comprend une seule étape dans laquelle la lumière ultra-violette provient d'une source monochromatique basse pression.

2. Procédé selon la revendication 1 dans lequel la quantité d'oxygène apportée par le peroxyde d'hydrogène exprimée en grammes par litre est comprise entre 0,5 et 3 fois la DCO de l'effluent à traiter.

3. Procédé selon la revendication 2 dans lequel la quantité d'oxygène apportée par le peroxyde d'hydrogène exprimée en grammes par litre est comprise entre 1 et 2 fois la DCO de l'effluent à traiter.

4. Procédé selon la revendication 1 dans lequel le pH du traitement est inférieur ou égal à 10,5.

5. Procédé selon la revendication 4 dans lequel le pH du traitement est compris entre 6 et 9.

6. Procédé selon la revendication 1 dans lequel la température est comprise entre 40 et 80°C.

7. Procédé selon la revendication 6 dans lequel la température est comprise entre 45 et 70°C.

8. Procédé selon la revendication 1, dans lequel la source de lumière ultra-violette est une lampe à vapeur de mercure basse pression.

9. Procédé selon la revendication 8, dans lequel la lampe à vapeur de mercure basse pression émet aux environs de 254 nm.

10. Procédé selon la revendication 1 dans laquelle les effluents photographiques proviennent de bains de développement chromogène des produits photographiques aux halogénures d'argent.

11. Procédé selon la revendication 10, dans laquelle les effluents photographiques contiennent des paraphénylènes diamines.
